Europäisches Patentamt

European Patent Office

Office européen des brevets

(19)

(11) Veröffentlichungsnummer: **0 469 300 A2**

# (12) EUROPÄISCHE PATENTANMELDUNG

(21) Anmeldenummer: **91110632.6**

(22) Anmeldetag: **27.06.91**

(51) Int. Cl.$^5$: **B23Q 7/03**, B23Q 7/04

(30) Priorität: **31.07.90 DE 4024277**

(43) Veröffentlichungstag der Anmeldung:
**05.02.92 Patentblatt 92/06**

(84) Benannte Vertragsstaaten:
**AT BE DE ES FR GB IT LU NL**

(71) Anmelder: **HETRAN Maschinen-Vertriebs GmbH**
**Alleestrasse 15 - 19**
**W-4817 Leopoldshöhe(DE)**

(72) Erfinder: **Schwerdfeger, Heinz**
**Bodelschwinghstrasse 15**
**W-4800 Bielefeld 1(DE)**

(74) Vertreter: **Patentanwälte Dipl.-Ing. Bodo Thielking Dipl.-Ing. Otto Elbertzhagen**
**Gadderbaumer Strasse 20**
**W-4800 Bielefeld 1(DE)**

(54) Vorrichtung zum Bewegen stangenförmigen Gutes in Richtung seiner Längsachse.

(57) Eine Vorrichtung zum Bewegen stangenförmigen Gutes, wie Rohre, Wellen oder dergleichen, insbesondere für Schälmaschinen mit umlaufendem Messerkopf, besitzt eine Vielzahl von Spannköpfen, die mit Hilfe von parallel zueinander angeordneten umlaufenden Ketten bewegt werden und die gesteuert spannbar und lösbar sind. Bei der neuen Lösung sind mehr als zwei umlaufende Ketten vorgesehen, welche sämtlich durch quer zu ihrer Laufrichtung angeordnete, ihrerseits parallel zueinander verlaufende Trägerelemente verbunden sind. Die Spannköpfe sind jeweils an den Trägerelementen befestigt, welche stirnseitig angeordnete Führungskörper aufweisen. Diese Führungskörper laufen an ortsfesten Führungsbahnen ab. Das Vorsehen einer Vielzahl von Ketten erlaubt die Verwendung von Ketten mit kleiner Teilung und führt zur Reduzierung der Baulänge gegenüber bekannten Vorrichtungen dieser Art.

FIG.2

Die Erfindung betrifft eine Vorrichtung zum Bewegen stangenförmigen Gutes, wie Rohre, Wellen oder dergleichen, in Richtung seiner Längsachse während einer Bearbeitung seiner Oberfläche - insbesondere durch Schälmaschinen mit umlaufendem Messerkopf - mit einer Vielzahl von auf einer Endlosbahn mit Hilfe von parallel zueinander angeordneten und umlaufenden Ketten bewegten Spannköpfen, die gesteuert spannbar und lösbar sind.

Bei einer bekannten Vorrichtung dieser Art (DE-PS 22 41 166) sind zwei parallel zueinander angeordnete umlaufende Ketten vorgesehen, zwischen denen die Spannköpfe aufgehängt sind. Die Spannköpfe tragen an Ihren beiden Stirnseiten jeweils Paare von Stützrollen, welche in als Führungsschienen ausgebildeten Endlosbahnen ablaufen.

Die bekannte Vorrichtung weist - ebenso wie ähnliche andere bekannte Konstruktionen - den Nachteil auf, daß zur Kraftübertragung nur zwei Ketten vorgesehen sind.

Damit die auftretenden Kräfte mit Hilfe dieser beiden Ketten übertragen werden können, müssen diese eine vergleichsweise große Teilung aufweisen. Dies hat zur Folge, daß die Baulänge bei einer vorgegebenen Gesamtzahl von Spannköpfen notwendig relativ groß werden muß.

Ausgehend von diesem Stand der Technik liegt der Erfindung die Aufgabe zugrunde, eine Vorrichtung der als bekannt vorausgesetzten Art so auszubilden, daß mehrere Ketten mit vergleichsweise kleiner Teilung verwendbar sind.

Die Lösung dieser Aufgabe erfolgt dadurch, daß mehr als zwei Ketten vorgesehen sind, welche sämtlich durch quer zu ihrer Laufrichtung angeordnete, ihrerseits parallel zueinander verlaufende Trägerelemente verbunden sind, wobei die Spannköpfe jeweils an den Trägerelementen befestigt sind, welche stirnseitig angeordnete Führungskörper aufweisen, die an ortsfesten Führungsbahnen ablaufen.

Es hat sich als zweckmäßig erwiesen, daß die Führungskörper Rollen sind.

Bei einer weiteren bevorzugten Ausführungsform weist jeder Spannkopf zwei verstellbare Spannbacken auf.

Ferner hat es sich als zweckmäßig erwiesen, daß die Spannköpfe über Kurvenbahnen betätigt werden.

Die erfindungsgemäße Vorrichtung erlaubt es, die erforderlichen Kräfte mit Hilfe einer beliebigen Anzahl von Ketten zu übertragen. Die von den Ketten aufzubringenden Zugkräfte werden durch die quer zu deren Laufrichtung angeordneten gemeinsamen Trägerelemente vergleichmäßigt, welche die Spannköpfe tragen. Die Trägerelemente selbst tragen stirnseitig angeordnete Führungskörper, die an ortsfesten Führungsbahnen ablaufen. Eine solche Anordnung führt einerseits zu einer gleichmäßigen Kraftübertragung und andererseits zu einer sicheren und stabilen Abstützung der Spannköpfe an ortsfesten Führungsbahnen.

Bevorzugte weitere Ausgestaltungen der Erfindung sind in den weiteren Unteransprüchen beschrieben. Nachstehend wird eine bevorzugte Ausführungsform der Erfindung anhand der Zeichnung beschrieben. Es zeigen:

Figur 1 - eine Seitenansicht der Vorrichtung mit einigen Spannköpfen und der vorne liegenden Kette,

Figur 2 - eine Teilansicht in Richtung des Pfeils II gemäß Figur 1,

Figur 3 - einen Teilbereich eines Spannkopfes in Hydraulikausführung,

Figur 4 - eine Stirnansicht gemäß IV in Figur III,

Figur 5 - eine Seitenansicht einer ersten Kurvenbahn für die Betätigung eines Spannkopfes,

Figur 6 - eine Seitenansicht einer ergänzenden zweiten Kurvenbahn für die Betätigung eines Spannkopfes.

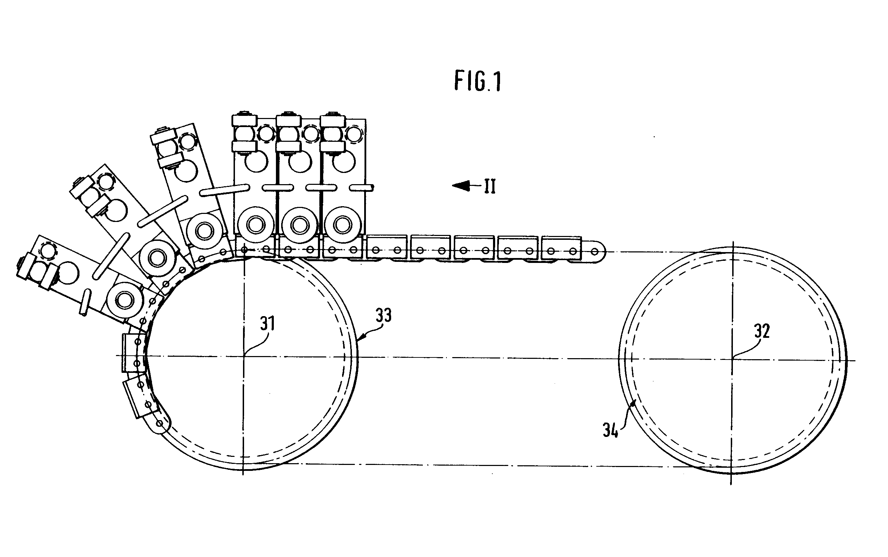

Um zwei zueinander parallel verlaufende ortsfeste Achsen 31 und 32 sind jeweils mehrere nebeneinander angeordnete Kettenräder drehbar. Von den nebeneinander angeordneten Kettenrädern sind in Figur 1 lediglich die beiden dem Betrachter zugewandten Kettenräder 33 und 34 sichtbar.

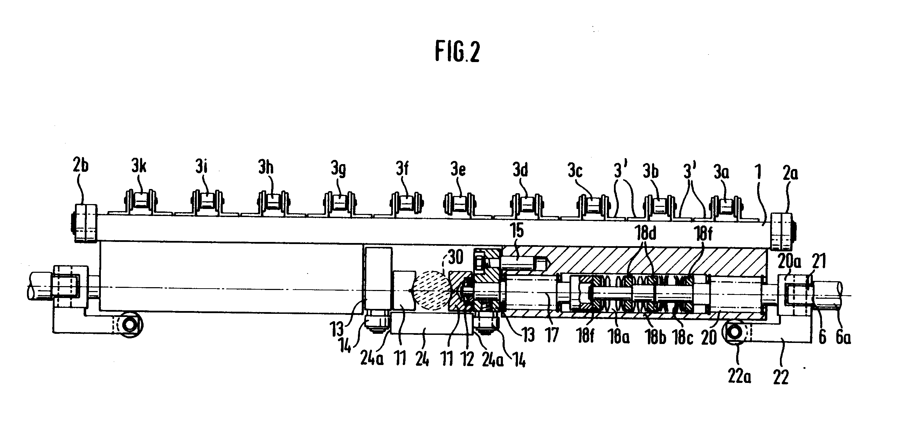

Jedem Paar von Kettenrädern ist eine von mehreren parallel zueinander umlaufenden Ketten 3a bis 3k (vergl. Figur 2) zugeordnet.

Die als Rollenketten ausgebildeten Ketten 3a bis 3k weisen Winkellaschen 3' auf, deren einer Schenkel jeweils an der Kette und deren anderer Schenkel jeweils an einem als Leiste ausgebildeten Trägerelement 1 befestigt sind. Jede Winkellasche ist an jeweils zwei benachbarten Rollen einer Rollenkette befestigt. Die Trägerelemente 1, welche sämtlich parallel zueinander angeordnet sind und sich auch parallel zu den Achsen 31 und 32 erstrecken, weisen auf ihren Stirnseiten als Rollen ausgebildete Führungskörper 2a und 2b auf. Die Trägerelemente 1 tragen jeweils einen Spannkopf 4, der aus zwei spiegelsymmetrisch ausgebildeten Teilen besteht. Jeder Spannkopf besitzt zwei Klemmstücke 11, deren jede schwenkbeweglich in einer Kugelpfanne 12 kardanisch gelagert ist. Die Klemmstücke 11 sind über Schrauben mit dem Halter 13 verbunden. Der Halter 13 trägt eine Führungsrolle 14 und einen Führungsbolzen 15. Der Kalter 13 ist mit einem Stössel 16 verbunden, der entlang der Achse 17 geradlinig geführt ist.

An den äußeren Enden der Spannkopfhälften ist jeweils ein weiterer Stössel 20 entlang der Achse 17 linear verschieblich geführt. Der äußere Stössel 20 trägt an seinem Gabelkopf 20a eine Führungsrolle 21, die an einer ortsfesten Kurvenbahn 6 abläuft.

An dem die Führungsrolle 21 tragenden Kopf ist ein weiterer Hebel 22 mit einer Rolle 22a angebracht.

Zwischen den beiden Stösselteilen 17 und 20 sind drei unterschiedlich harte Tellerfederpakete 18a, 18b und 18c angeordnet, die sich jeweils gegen Zwischenscheiben 18d bzw. stirnseitig angeordnete Scheiben 18f abstützen.

Beim Umlaufen der Rollenketten 3a bis 3k werden die Spannköpfe 4 durch Ablaufen der Führungsrollen 21 an den ortsfesten Kurvenbahnen 6 gespannt. Die an dem Druckstück 6a vorgesehenen Kurvenbahnen 6 besitzen Anlaufflächen 23 und Ablaufflächen 23a. Durch die Anordnung und Ausgestaltung der Kurvenbahn 6 wird der erforderliche Spanndruck aufgebaut, gehalten und schließlich wieder abgebaut.

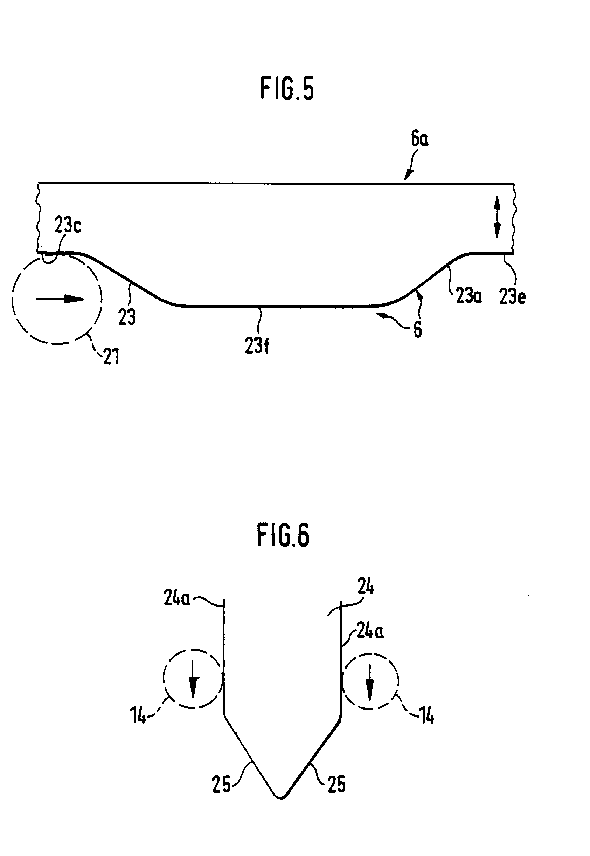

In den Bereichen, in denen die Spannbacken 11 nicht das strangförmige Material 30 einspannen müssen, werden die Klemmstücke 11 mit Hilfe eines Kurvenstücks 24 (vergl. Figur 6) so weit auseinandergehalten, daß Werkstücke mit dem größtmöglichen Durchmesser zwischen die Spannbacken 11 passen. Die Führungsrollen 14 laufen zunächst an den parallel zueinander verlaufenden Seitenflächen 24a des Kurvenstücks 24 ab und danach über die schräg zusammenlaufenden Flächen 25.

Wenn die zusammenlaufenden Flächen 25 die Führungsrollen 14 freigegeben haben, liegen die Klemmbacken 11 lediglich mit einer Vorspannung an dem Werkstück 30 an, die aus der Lage der Kurvenfläche 23c bzw. 23e der Kurvenbahn 6 resultiert. Das Werkstück 30 wird dann also mit einer geringen Klemmkraft ergriffen, welche sich durch den Hub der Rollen 21 auf das Kurvenniveau 23f erhöht.

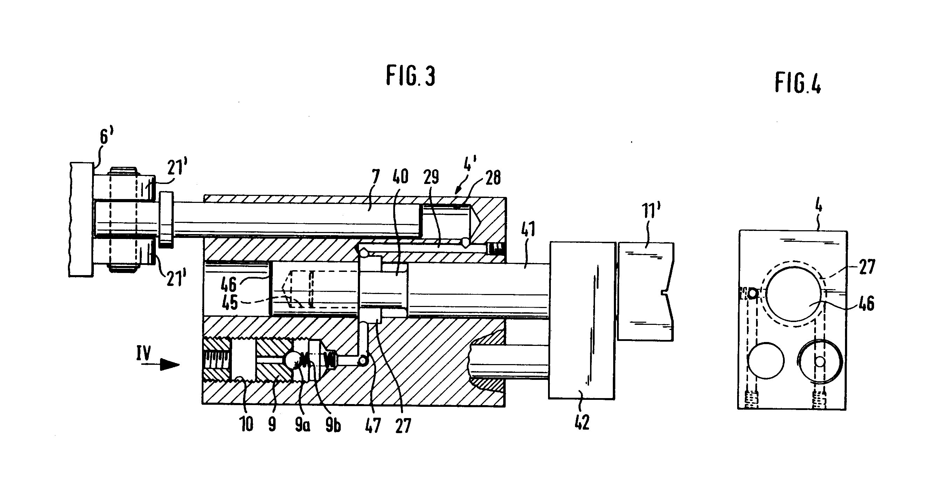

Statt des in Figur 1 sichtbaren Spannkopfes 4 ist in Figur 3 ein hydraulisch betätigter Spannkopf 4' gezeigt. Die Betätigung dieses hydraulisch betätigten Spannkopfes 4' erfolgt ebenfalls über Führungsrollen 21' an der Kurvenbahn 6', in ähnlicher Weise wie bei Figur 1.

In Figur 3 ist lediglich eine Hälfte der Spannvorrichtung 4' dargestellt. Die Führungsrollen 21' sitzen an einem Kolben 7, der Hydraulikflüssigkeit in der Kolbenbohrung 28 beaufschlagt. Die Kolbenbohrung 28 ist über einen Kanal 29 mit einem gestuften Ringraum 27 verbunden. Der Ringraum 27 wird von einem Führungszapfen 40 eines Kolbens 41 durchsetzt. Der Kolben 41 trägt an seinem Ende einen Halter 42 für die Klemmbacken 11. Der Halter 41 ist gegen ein Verdrehen dadurch gesichert, daß er eine Führungsstange 43 aufweist, die in eine Führungsbohrung 44 eingreift.

Der Führungszapfen 40, welcher einteilig mit dem Kolben 41 ausgebildet ist und einen kleineren Durchmesser als der Kolben 41 aufweist, taucht mehr oder weniger tief in eine Sacklochbohrung 45 eines Stopfens 46 ein.

Mit dem gestuft ausgebildeten Ringraum ist über einen Kanal 47 ein Vorratsraum 10 verbunden. Zwischen der Bohrung 47 und dem Vorratsraum 10 ist ein Rückschlagventil 9 vorgesehen. Dieses Rückschlagventil ist ständig geschlossen. Bei einem sich im Ringraum 27 aufbauenden Druck wird die Rückschlagkugel 9a außer durch die Kraft der Feder 9b auch durch den Öldruck gegen ihren Sitz angepreßt. Bei einem Verfahren des Kolbens 7 gemäß Figur 3 nach rechts führt der daraus resultierende Druckaufbau zu einem Verschieben des Kolbens 41 mit dem Halter 42 und dem Klemmstück 11' nach rechts zur Anlage an das nicht dargestellte Werkstück. Die gemäß Figur 3 rechte Hälfte des Spannkopfes 4 ist nicht dargestellt, jedoch spiegelsymmetrisch ausgebildet.

Bei den Ausführungsformen gemäß Figuren 2 sowie 3 und 4 ist detailliert lediglich eine Hälfte eines Spannkopfes 4 bzw. 4' dargestellt. Die zweite zugehörige Hälfte muß nicht spiegelsymmetrisch und technisch gleich ausgebildet sein. Es ist vielmehr auch möglich, die Verbindung zwischen den Führungsrollen 21 bzw. 21' und den zugehörigen Klemmbacken 11 bzw. 11' unelastisch, also starr auszubilden, weil jeweils die gegenüberliegende Klemmbacke mit ihrer Führungsrolle 21 bzw. 21' elastisch verbunden ist.

**Patentansprüche**

1. Vorrichtung zum Bewegen stangenförmigen Gutes, wie Rohre, Wellen oder dergleichen, in Richtung seiner Längsachse während einer Bearbeitung seiner Oberfläche - insbesondere durch Schälmaschinen mit umlaufendem Messerkopf - mit einer Vielzahl von auf einer Endlosbahn mit Hilfe von parallel zueinander angeordneten und umlaufenden Ketten bewegten Spannköpfen, die gesteuert spannbar und lösbar sind,
dadurch gekennzeichnet,
daß mehr als zwei Ketten (3a - 3k) vorgesehen sind, welche sämtlich durch quer zu ihrer Laufrichtung angeordnete, ihrerseits parallel zueinander verlaufende Trägerelemente (1) verbunden sind, wobei die Spannköpfe (4) jeweils an den Trägerelementen (1) befestigt sind, welche stirnseitig angeordnete Führungskörper (2a und 2b) aufweisen, welche an ortsfesten Führungsbahnen ablaufen.

2. Vorrichtung nach Anspruch 1,
dadurch gekennzeichnet,

daß die Führungskörper (2a, 2b) Rollen sind.

3. Vorrichtung nach Anspruch 1 oder 2,
   dadurch gekennzeichnet,
   daß jeder Spannkopf (4) zwei verstellbare Klemmbacken (11) aufweist.

4. Vorrichtung nach einem oder mehreren der Ansprüche 1 bis 3,
   dadurch gekennzeichnet,
   daß die Spannköpfe (4) über Kurvenbahnen (6) betätigt werden.

5. Vorrichtung nach einem oder mehreren der Ansprüche 1 bis 4,
   dadurch gekennzeichnet,
   daß die von der Kurvenbahn (6) beaufschlagten Betätigungselemente für mindestens eine der Klemmbacken (11) federnd elastisch ausgebildet sind.

6. Vorrichtung nach einem oder mehreren der Ansprüche 1 bis 5,
   dadurch gekennzeichnet,
   daß die Kurvenbahn (6) für die Betätigung der Spannköpfe (4) verstellbar ist.

7. Vorrichtung nach einem oder mehreren der Ansprüche 1 bis 6,
   dadurch gekennzeichnet,
   daß die Betätigung der Spannköpfe (4) hydraulisch erfolgt.

8. Vorrichtung nach einem oder mehreren der Ansprüche 1 bis 7,
   dadurch gekennzeichnet,
   daß die zum Ergreifen des stangenförmigen Gutes ausgebildeten Klemmbacken (11) schwenkbeweglich gelagert sind.

9. Vorrichtung nach Anspruch 8,
   dadurch gekennzeichnet,
   daß die schwenkbewegliche Lagerung der Klemmbacken (11) eine kardanische Lagerung ist.

# FIG.1

← II

31    33

34    32

EP 0 469 300 A2

FIG.2

# FIG.3

# FIG.4

EP 0 469 300 A2

## FIG.5

## FIG.6